# EUROPÄISCHE PATENTANMELDUNG

(11) **EP 0 767 110 A1**
(43) Veröffentlichungstag der Anmeldung: **09.04.1997**
(21) Anmeldenummer: 96107327.7
(22) Anmeldetag: 09.05.1996
(51) Int. Cl.: B65D 88/64

(54) **Verfahren und Vorrichtung zum dosierten Austrag aus einem flexiblen Vorratsbehälter**

(30) Priorität: 06.10.1995 DE 19537219
(71) Anmelder: CARL SCHENCK AG, D-64293 Darmstadt (DE)
(72) Erfinder: Heinrici, Harald, 64584 Biebesheim (DE); Törner, Ludger, 64859 Eppertshausen (DE); Biebel, Jürgen, 65428 Rüsselsheim (DE)

(57) **Zusammenfassung**

Die Erfindung betrifft eine Dosiervorrichtung zum Abzug eines Dosiergutes aus einem flexiblen Vorratsbehälter, an dessen Auslauföffnung ein Austragsorgan angebracht ist. Dabei werden die Vorratsbehälterwände zur Austragshilfe in Bewegung gesetzt. Dazu wird das Austragsorgan (6) kraftschlüssig am Behälterauslauf (10) befestigt und unter dem Vorratsbehälter (3, 12, 17) beweglich angeordnet.

## Beschreibung

Die Erfindung betrifft eine Vorrichtung zum Austragen eines Dosiergutes aus einem flexiblen Vorratsbehälter gemäß dem Oberbegriff des Patentanspruchs 1 und ein Verfahren gemäß dem Oberbegriff des Patentanspruchs 10.

Bei der Zuführung von Dosiergütern aus einem Vorratsbehälter bzw. Bunker ist es häufig erforderlich, das Dosiergut gleichmäßig dem Abzugsorgan zuzuführen. Insbesondere wenn es sich bei dem Dosiergut um schwerfließende Stoffe handelt, ist es notwendig, den Vorratsbehälter mit Austragshilfen, wie Rührwerken und dergleichen zu versehen. Derartige Rührwerke haben allerdings den Nachteil, daß sich die Austragshilfen im Produktraum des Vorratsbehälters befinden und daher sich häufig das Dosiergut an den Austragshilfen festsetzt und in gewissen Zeitabständen entfernt werden muß.

Es sind deshalb Dosiervorrichtungen bekannt geworden, bei denen eine Austragshilfe außerhalb des Vorratsbehälters angebracht ist. Aus dem Firmenprospekt F9156 "Volumetrische Dosierer" der Firma Carl Schenck AG in Darmstadt, Ausgabe Oktober 1994, ist eine Dosiervorrichtung abgebildet und beschrieben, bei der der Vorratsbehälter aus einem flexiblen Material besteht und außen an den Wänden des Vorratsbehälter bewegliche Paddel angeordnet sind. Die Paddel sind mit einem Antriebsmotor verbunden, der die Paddel periodisch gegen die flexiblen Seitenwände drückt und so die Behälterwände in Bewegung versetzt, so daß das Dosiergut zur Austragsöffnung gleichmäßiger nachrutscht. Eine solche Bewegung der Behälterwände durch derartige Paddel ist sehr aufwendig und kostenintensiv.

Der Erfindung liegt deshalb die Aufgabe zugrunde, eine Vorrichtung und ein Verfahren der eingangs genannten Art so zu verbessern, daß bei gleichbleibender Austragshilfe die Vorrichtung und das Verfahren wesentlich vereinfacht werden.

Diese Aufgabe wird durch die im Patentanspruch 1 und im Patentanspruch 10 angegebene Erfindung gelöst. Weiterbildungen und vorteilhafte Ausführungsbeispiele der Erfindung sind in den Unteransprüchen angegeben.

Die Erfindung hat den Vorteil, daß kein spezieller Antrieb für die Bewegung der flexiblen Behälterwände erforderlich ist, sondern die Antriebsbewegung des Austragsorgans gleichzeitig zur Bewegung der flexiblen Behälterwände mitbenutzt wird. Da die Austragsorgane kontinuierlich in Bewegung sind, wird auch eine kontinuierliche Bewegung der flexiblen Behälterwände erreicht. Durch eine derartige gemeinsame Ausnutzung des Antriebs des Austragsorgans zum Abzug des Dosiergutes und der Bewegung der flexiblen Vorratsbehälterwände wird in vorteilhafter Weise auch eine gewichts- und energiesparende Vorrichtung und Verfahren geschaffen.

Weiterhin ist es bei dem erfindungsgemäßen Verfahren vorteilhaft, daß dieses Verfahren bei nahezu allen Behälterformen einsetzbar ist. So kann das erfindungsgemäße Verfahren sowohl bei runden als auch bei eckigen Vorratsbehältern eingesetzt werden, da die flexiblen Behälterwände nur durch die Antriebsbewegung des Austragsorgans in Bewegung versetzt werden. Dabei kommt es nur darauf an, daß das Austragsorgan kraftschlüssig mit dem Behälterauslauf verbunden ist.

Die Erfindung wird anhand eines Ausführungsbeispiels, das in der Zeichnung dargestellt ist, näher erläutert. Es zeigen:
- Fig. 1:: eine vereinfachte schematische Darstellung eines Vibrationsdosierers mit flexiblem Vorratsbehälter;
- Fig. 2:: eine vereinfachte schematische Darstellung eines runden flexiblen Vorratsbehälters und
- Fig. 3:: eine vereinfachte schematische Darstellung eines rechteckigen flexiblen Vorratsbehälters.

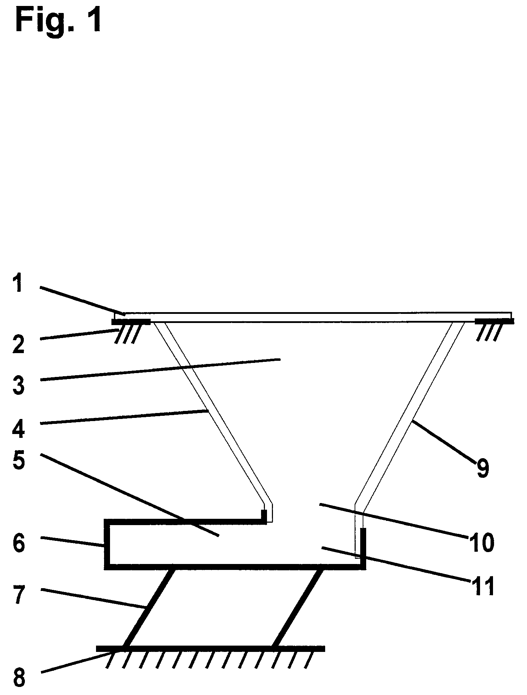

Die Zeichnung zeigt in Fig. 1 eine vereinfachte schematische Darstellung eines Vibrationsdosierers 5, der mit einem runden Vorratsbehälter 3 verbunden ist, dessen Begrenzungswände aus flexiblem Material bestehen.

Der Vorratsbehälter 3 ist trichterförmig ausgebildet und an seiner weitesten Öffnung mit einem horizontalen Rand 1 versehen, der an einem stationären Geräteteil 2 befestigt ist. An seiner engsten Stelle besitzt der Vorratsbehälter 3 eine Auslauföffnung 10, deren Rand mit der Dosierrinne 5 des Vibrationsdosierers 6 verbunden ist. Die Seitenwände 4, 8 des Vorratsbehälters 3 sind aus flexiblem Material gefertigt, wie beispielsweise aus Gummi oder flexiblen Kunststoffen. Dabei kann der Vorratsbehälter 3 sowohl rund, quadratisch, rechteckig oder eine andere Form besitzen, die geeignet ist, die gewünschten Dosiergüter aufzunehmen und in ein Austragsorgan einzuführen. Der Vorratsbehälter 3 muß auch nicht überall über flexible Behälterwände verfügen, sondern es kann im Einzelfall genügen, wenn die Teile aus flexiblem Material bestehen, die eine Vergleichmäßigung des speziellen Dosiergutes bereits bewirken. Dies sind meist die unteren sich verjüngenden Teilbereiche des Vorratsbehälters 3 nahe der Austragsöffnung 10. So könnte der Vorratsbehälter 3 beispielsweise auch aus einem oberen zylindrischen Teil starren Materials bestehen, dem unten ein trichterförmiger Teil aus flexiblem Material angefügt ist.

Die in Fig. 1 dargestellten Behälterwände 4, 9 sind an allen Stellen gleichmäßig ausgebildet. Dabei hängt die Wanddicke weitgehend von der geforderten Elastizität und der benötigten Festigkeit des flexiblen Materials ab. Es sind jedoch auch Wandstärken unterschiedlicher Dicke ausführbar, deren Bemessung auf die gewünschte Bewegung bei vorgegebener Dämpfung und Festigkeit abgestimmt wird.

Die untere Auslauföffnung 10 des Vorratsbehälters 3 mündet unmittelbar in den Einfüllschacht der Dosierrinne 5 des Vibrationsdosierers 6. Der Vibrationsdosierer 6 stellt dabei ein Austragsorgan dar, das das Dosiergut vom Vorratsbehälter 3 zu seinem Auslauf befördert. Die Dosierrinne 3 ist über Blattfedern 7 als federnde Lagerung auf einem stationären Teil 8 der Dosiervorrichtung befestigt. Weiterhin verfügt die Dosierrinne 3 auch über einen nicht dargestellten Schwingantrieb, der die Schwingrinne 5 kontinuierlich in eine bekannte gerichtete Bewegung versetzt, durch die das Dosiergut in Förderrichtung bewegt wird. Der Schwingantrieb kann beispielsweise ein elektromagnetischer Schwingungserreger oder ein Unwuchterreger sein, der eine sogenannte Mikrowurfbewegung in Förderrichtung des Dosiergutes erzeugt.

Die Auslauföffnung 10 des Vorratsbehälters 3 ist fest mit dem Einfüllschacht 11 der Dosierrinne 3 verbunden, so daß eine kraftschlüssige Verbindung zwischen beiden Teilen entsteht. Da die Dosierrinne 5 in Förderrichtung schwingt, überträgt sich die Schwingungsbewegung auch auf den flexiblen Teil des Vorratsbehälters 3, so daß eine Bewegung in der Behälterwand 4, 9 erzeugt wird. Bei einer vorteilhaften Abstimmung zwischen den flexiblen Wandbereichen und der Schwingung der Dosierrinne 5 ergibt sich eine Austragshilfe für das im Vorratsbehälter 3 befindliche Dosiergut. Je nach Konsistenz und Anhaftverhalten des Dosiergutes kann durch eine vorgebbare Bewegung der flexiblen Behälterwände 4, 9 ein gleichmäßiger störungsfreier Austrag des Dosiergutes und damit eine hohe Dosiergüte erreicht werden. Dabei kann es besonders vorteilhaft sein, die stark anhaftgefährdeten Bereiche des Vorratsbehälters 3 mit hochflexiblen oder dünnwandigen Material zu versehen, um hier eine stärkere Bewegung zu erzielen, die einen gleichmäßigeren Abfluß ermöglicht.

Als Austragsorgan 6 können aber beispielsweise auch Schneckendosierer, Banddosierer oder andere Dosiersysteme vorgesehen werden, die schon allein durch ihre Antriebsvorrichtung eine Eigenbewegung ausführen. Wird ein solches Austragsorgan 6 kraftschlüssig mit einem flexiblen Behälterauslauf 10 verbunden, ergibt sich bei einer federnden Lagerung 7 oder Aufhängung des jeweiligen Austragsorgans 6 auch eine Übertragung der Bewegung auf die flexiblen Behälterwände 4, 9, die als Austragshilfe benutzt werden kann. Dieser Effekt kann noch durch einen unwuchtigen Antrieb der Austragsorgane 6 in bestimmter Richtung und Amplitude gesteuert werden, um die gewünschte Austragshilfe zu erzielen.

Eine derartige erfindungsgemäße Austragshilfe kann auch bei Differential-Dosierwägeeinrichtungen eingesetzt werden, wobei insbesondere das geringe Eigengewicht vorteilhaft wäre, da für die verwogene Dosiereinrichtung kostengünstige Wägezellen mit geringerer Nennlast einsetzbar wären.

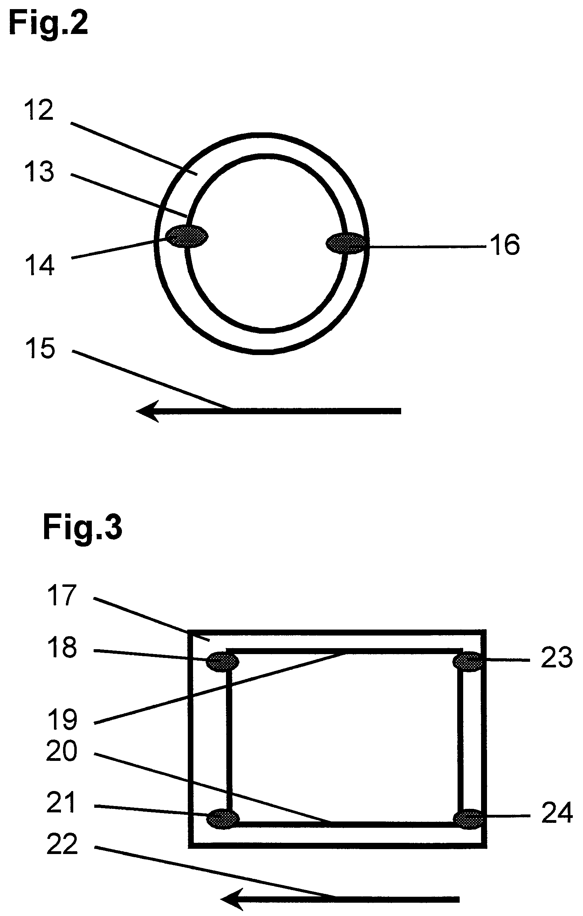

In Fig. 2 und 3 der Zeichnung werden zwei energiesparende Behälterausbildungen dargestellt, die über Bereiche mit Versteifungselementen verfügen, wodurch eine gezielte Verformung der elastischen Behälterwände erreichbar ist, die eine besonders effektive Austragshilfe bewirken. Dabei zeigt die Fig. 2 einen runden Vorratsbehälter 12, der gegenüberliegend zwei elliptische Versteifungselemente 14, 15 besitzt. Diese Versteifungen 14, 15 sind so angeordnet, daß deren durch den Mittelpunkt des Vorratsbehälters 12 verlaufende Verbindungslinie in Förderrichtung 15 verläuft. Wird ein derartiger Vorratsbehälter 12 mit einer Vibrationsdosierrinne kraftschlüssig verbunden, so entsteht eine starke ellipsenartige Verformung des flexiblen Behälterteils 13, durch den das Dosiergut besonders effektiv in Richtung der Austragsöffnung geleitet wird, wodurch eine energiesparende Austragshilfe erreichbar ist.

In Fig. 3 der Zeichnung ist ein rechteckiger Vorratsbehälter 17 dargestellt, an dessen vier Eckpunkten ebenfalls elliptische Versteifungselemente 18, 21, 23, 24 angebracht sind. Wird dieser Vorratsbehälter 17 mit dessen Auslauföffnung kraftschlüssig mit der Vibrationsdosierrinne verbunden, so entsteht eine starke Stauchung der in Förderrichtung 22 verlaufenden Seitenwände 19, 20, durch die ebenfalls eine energiesparende effektive Verformung des flexiblen Vorratbehälters erreichbar ist.

## Patentansprüche

1. Dosiervorrichtung zum Abzug eines Dosiergutes aus einem flexiblen Vorratsbehälter, an dessen Auslauföffnung ein Austragsorgan angebracht ist, wobei die Vorratsbehälterwände zur Austragshilfe in Bewegung versetzt werden, dadurch gekennzeichnet, daß das Austragsorgan (6) kraftschlüssig am Behälterauslauf (10) befestigt ist und das Austragsorgan (6) unter dem Vorratsbehälter (3, 12, 17) beweglich angeordnet ist.

2. Vorrichtung nach Anspruch 1, dadurch gekennzeichnet, daß der Vorratsbehälter (3) rund oder eckig ausgebildet ist, oder sowohl aus runden und eckigen Elementen zusammengesetzt ist.

3. Vorrichtung nach Anspruch 1 oder 2, dadurch gekennzeichnet, daß der Vorratsbehälter (3, 12, 17) ganz oder teilweise aus flexiblem Material besteht, dessen Behälterwände (4, 9) über gleichmäßige oder unterschiedliche Wandstärken verfügen.

4. Vorrichtung nach wenigstens einem der vorhergehenden Ansprüche, dadurch gekennzeichnet, daß an den flexiblen Wandbereichen des Vorratsbehälters (3, 12, 17) Versteifungselemente (14, 16, 18, 21, 23, 24) vorgesehen sind, die zur Dämpfung der Verformung bestimmter Wandbereiche dienen.

5. Vorrichtung nach wenigstens einem der vorhergehenden Ansprüche, dadurch gekennzeichnet, daß die flexiblen Wandbereiche des Vorratsbehälters (3, 12, 17) aus Gummi, gummiertem Textilgewebe, flexiblem Kunststoffmaterial oder anderen Materialien mit bestimmter Flexibilität und Festigkeit bestehen.

6. Vorrichtung nach einem der Ansprüche 1 bis 5, dadurch gekennzeichnet, daß das Austragsorgan (6) unter dem Vorratsbehälter (3, 12, 17) federnd gelagert oder aufgehängt ist.

7. Vorrichtung nach wenigstens einem der vorhergehenden Ansprüche, dadurch gekennzeichnet, daß das Austragsorgan (6) in Förderrichtung oder quer zur Förderrichtung beweglich angeordnet ist.

8. Vorrichtung nach wenigstens einem der vorhergehenden Ansprüche, dadurch gekennzeichnet, daß als Austragsorgan (6) ein Vibrationsförderer, ein Schneckenförderer, ein Bandförderer oder ein anderer Förderer vorgesehen ist, der so ausgebildet ist, daß zumindest ein Bewegungsanteil auf den Vorratsbehälter (3, 12, 17) übertragbar ist.

9. Vorrichtung nach wenigstens einem der vorhergehenden Ansprüche, dadurch gekennzeichnet, daß die Dosiervorrichtung in einem kontinuierlichen Wägesystem vorgesehen ist.

10. Verfahren zum Austragen eines Dosiergutes aus einem flexiblen Vorratsbehälter, an dessen Auslauföffnung ein Austragsorgan angebracht ist, wobei die Behälterwände zur Austragshilfe in Bewegung gesetzt werden, dadurch gekennzeichnet, daß das Austragsorgan (6) kraftschlüssig und beweglich am Behälterauslauf (10) angeordnet ist, so daß durch die Bewegung des Austragsorgans (6) flexible Bereiche der Behälterwände (4, 9) in Bewegung versetzt werden.
